# EUROPEAN PATENT SPECIFICATION

(11) **EP 1 224 518 B1**
(45) Date of publication and mention of the grant of the patent: **15.07.2009**
(21) Application number: 00964537.5
(22) Date of filing: 06.10.2000
(51) Int. Cl.: G06F 21/20, G07C 9/00

(54) **TRUSTED COMPUTING PLATFORM WITH BIOMETRIC AUTHENTICATION**
GESICHERTE COMPUTERPLATTFORM MIT BIOMETRISCHER AUTHENTIFIZIERUNG
PLATE-FORME INFORMATIQUE SÉCURISÉE AVEC AUTHENTIFICATION BIOMÉTRIQUE

(30) Priority: 08.10.1999 GB 9923802
(43) Date of publication of application: 24.07.2002
(73) Proprietor: Hewlett-Packard Company, Palo Alto CA 94304-1112 (US)
(72) Inventor: VAMVAKAS, Athanasios, Athens (GR); PEARSON, Siani, Bristol BS9 3PZ (GB); CHEN, Liqun, Bristol BS32 9DQ (GB)
(74) Representative: Lawrence, Richard Anthony
(86) International application number: PCT/GB2000/003850
(87) International publication number: WO 2001/027723

(56) References cited:
- WO-A-00/00882
- WO-A-96/36934
- WO-A-98/55912
- US-A- 4 993 068
- US-A- 5 473 692

## Description

The invention provides a method for user authentication and a system, and components of a system, for providing such user authentication.

Security tokens, for example smart cards or cryptographic coprocessors, have been proposed for various security functions including accessing computer platforms ("host platforms") and electronic commerce. For example, a smart card storing confidential information accessible only to a relevant user can be used by the user to log on to a computer, to sign a document, or to provide credentials needed for electronic commerce. Where a user needs to access sensitive information or services, biometrics can also be used to enhance user authentication.

Authentication poses particularly difficult problems in distributed environments, where a primary server may not be available and each individual host needs to be able to enforce access control decisions. It is important that a high degree of security is maintained (particularly in military or financial systems) while the functionality of the system must be acceptable to users. If biometrics is used to enhance authentication, any personal biometric information should be properly secured against unauthorised access or manipulation. Furthermore, attacks such as spoofing of users, unauthorised modification of readers, substitution of software or replay attacks need to be prevented.

All existing biometric systems use two procedures to verify users. One is enrolment - the system captures an individual's biometric information (referred to hereafter as "Bio code"). The second is the matching process, by which the Bio code is compared to recently captured biometric information (hereafter referred to as the "Bio data") resulting in either a match, or no match. The matching process is further categorized into verification (one-to-one) or identification (one-to-many). Many different biometric systems exist (fingerprint, retina, hand geometry...) and the actual choice for a system integrator depends on the characteristics of each technique (a signature may be excellent for finance but poor for access control...).

It is becoming common to implement biometric technology in existing systems to increase security and reduce the problems of password management. The biggest threat to such systems is that the user's biometric data becomes compromised, allowing replay attacks. Existing vendors claim to support encryption between biometric reader and computer, but this is generally at a low level and susceptible to replay.

WO 96/36934 provides an example of a system for using biometric data for access control. A user's biometric data is sampled by a hardened biometric reader protected against unauthorised access or subversion. This biometric data is used to provide identification codes, which are provided to systems interacting with the biometric reader over appropriate network connections.

Existing protocols for secure authentication using biometric readers and smart cards are described in "Smart cards portable security" by J-P Thomasson and L Baldi, Second Annual IEEE International Conference on Innovative Systems in Silicon, 1997, and in "On Enabling Secure Applications through Off-line Biometric Identification" by GI Davida, Y Frankel and BJ Matt, Symposium on Security and Privacy IEEE 1998. In these arrangements, smart cards are used essentially for storage, and problems of eavesdropping on the biometric reader are not discussed.

US Patent No. 4993068 discloses a personal identification system for use in authenticating individuals for physical access control or for transactions. An individual bears a card which contains encrypted biometric data (there may be additional information encrypted, such as a password associated with the individual). The data is provided in encrypted form by the card issuer, who has a trust relationship with the controller of the access control or transaction site. The individual provides the card to a card reader associated with a secure computer at the access control or transaction site, and has his or her biometric data sampled by a biometric reading device associated with the same secure computer. The secure computer makes an authentication decision based upon comparison of the stored and sampled biometric data (augmented in one example by provision of a password by the individual through an input device provided for the purpose).

One aspect of the present invention is an apparatus as defined in independent claim 1. Another aspect of the invention is a method as defined in independent claim 7. Further embodiments of the invention are specified in the respective appended dependent claims.

In a first aspect of the invention, there is provided a data processing system adapted to authenticate a user, the system comprising:
a biometric reader;
a token reader; and
a computing platform comprising a main platform processor and a trusted component comprising:
   a further processor in the form of a secure processor protected from physical and logical interference,
   a non-volatile first memory for holding a private key and a certificate of the corresponding public key, and
   a second memory,
the trusted component being operative upon initiation of the platform to acquire a value of an integrity metric of the platform and store it in to the second memory;
wherein the trusted component is further operative to authenticate a user by:
communicating with the token reader to:
   participate in mutual authentication with a secure token according to a cryptographic protocol that makes use of the private key and certificate stored in the first memory,
   provide the integrity metric stored in the second memory to the token whereby to enable the token to carry out an integrity check on the computing platform by comparing the integrity metric value with an authentic value, and
   retrieve previously captured user biometric information from the token,
communicating with the biometric reader to authenticate the biometric reader and obtain newly captured user biometric data.
comparing the previously captured user biometric information and the newly captured user biometric data whereby to authenticate the user if the previously captured user biometric information and the newly captured user biometric data match.

In a second aspect of the invention, there is provided a method of authenticating a user by a data processing system comprising a biometric reader, a token reader, and a computing platform containing a main processor and a trusted component, the trusted component comprising a further processor in the form of a secure processor protected from physical and logical interference, a non-volatile first memory for holding a private key and a certificate of the corresponding public key, and a second memory; the method comprising:
upon initiation of the platform, the trusted component acquiring a value of an integrity metric of the platform and storing it in to the second memory;
the trusted component communicating with the token reader to participate in mutual authentication with a secure token containing previously captured user biometric data, the mutual authentication being effected in accordance with a cryptographic protocol that makes use of the private key and certificate stored in the first memory to authenticate the trusted component to the token;
the trusted component providing the integrity-metric value stored in the second memory to the token and the token comparing this value with an authentic value;
the trusted component communicating with the biometric reader to authenticate the biometric reader and to receive therefrom user biometric data captured by the biometric reader;
the token transferring the previously captured user biometric data to the trusted component;
the trusted component comparing the authentic user biometric data with the captured user biometric data; and
the trusted component authenticating the user on the basis of the biometric data comparison.

Of use in the present invention is a trusted component (described here below but also in the applicant's copending International Patent Application published under WO 00/48063 entitled "Trusted Computing Platform"). Such a component has the main purpose of reassuring a user or other interacting party that a platform is reliable and is not at risk of subversion. Other desirable functionality includes monitoring of the integrity of code and of providing a secure, reliable display to the user. A trusted component desirably contains a cryptographic processor and the capacity to communicate securely with other processing entities.

A preferred embodiment of the present invention uses a tamper-proof trusted component (TC) in a computing platform (possibly public, or shared by several users) in conjuction with a secure token such as a smart card (SC) and a biometric reader (BR) (typically an independent machine) to authenticate the owner of the token securely. If mutual authentication succeeds, biometric data is obtained via the reader and compared within the trusted component with bio code pre-stored in the secure token.

In the preferred model the TC is the main controller of the information flow, acting like a primary server. The SC carries Bio code and transfers it securely to the TC. The BR should also obtain and send the Bio data to the TC securely.

In specific arrangements according to the invention, authentication is as follows. SC and TC mutually authenticate - if successful, Bio code passes to the TC. (Alternatively Bio code could be held centrally under server control and accessed by a reference passed from the SC). The TC authenticates the BR (may not be necessary if the BR is integral with the TC's platform, or with the SC). The SC may also need to authenticate the BR (indirectly, via the TC). If authentication is satisfied, user data may be captured by the BR and sent to the TC, which compares Bio code and Bio data. The match result can be reported to the user by a trusted display (described below) or to the SC - reporting to the SC may be effective if certain data is only to be released by the SC after user authentication. The TC may then be used to obtain documents restricted to the owner of the SC. Either or both the TC and the SC can make a log of successful or failed authentication attempts, transfer of Bio code or data, and/or the results of the matching process (together with any data or applications used in consequence).

In a preferred arrangement, SC authenticates the TC, TC authenticates the BR and the TC, and the SC and the TC work together to authenticate the user. The trusted relationships are as follows: SC, TC and BR know the public keys of a certification authority (CA) and believe that only the CA knows the corresponding private keys and that these key pairs are valid. SC, TC and BR each believe that the other entities will follow the correct protocol.

Specific embodiments of the invention will now be described, by way of example, with reference to the accompanying drawings, in which:
Figure 1 shows elements of a host computer appropriate for use as a trusted client platform in embodiments of the invention;
Figure 2 shows the hardware architecture of the host computer of Figure 1;
Figure 3 shows the elements of a trusted device suitable for use in embodiments of the invention;
Figure 4 shows a preferred process for obtaining an integrity metric;
Figure 5 shows a process for verifying the integrity of a trusted platform;
Figure 6 shows a process for verifying the integrity of a trusted platform by a user with a smart card;
Figure 7 shows the processing engine of a user smart card suitable for use in the process of Figure 6;
Figure 8 shows a physical system for implementing an embodiment of the invention;
Figure 9 shows transactions between components in an embodiment of the invention; and
Figure 10 shows a logical arrangement of each component used in an embodiment of the invention.

An embodiment of the present invention will now be described, by way of example. A part of the system of this preferred embodiment is a client platform as will be described which contains a trusted component, the trusted component allowing secure and reliable interaction with the client platform by users or other parties communicating with the client platform. Such a trusted component is described below, but is more fully described in another patent publication of the applicant, WO 00/48063. The trusted component in the client platform also controls the client platform display, so the user can be confident that what is seen on the display has not been subverted by an unauthorised process operating on the client platform. This aspect of the trusted component is also described below, but is more fully described in another patent publication of the applicant, WO 00/73879. The system also employs in preferred embodiments a trusted token personal to a user - in the embodiment described in detail here, not only the client platform but also the server contains a trusted component (though this does not need to have trusted display functionality).

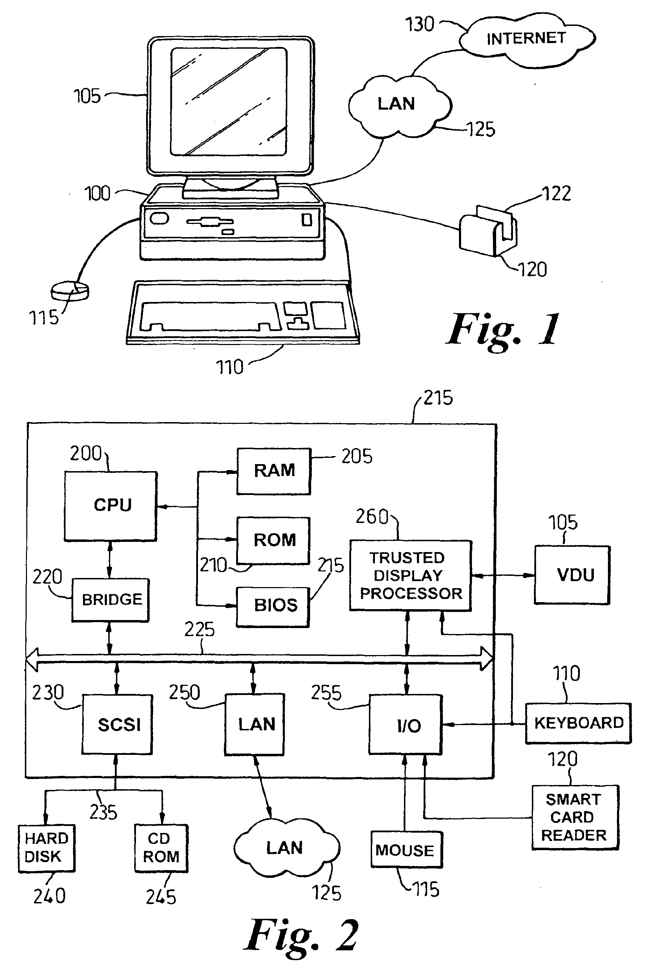

Certain elements of the system - the trusted component, including trusted display functionality, and the user smart card - will now be described in detail with reference to Figures 1 to 7. The skilled person will appreciate that in the context of the present invention, the specific form of trusted computing platform (and trusted component), trusted display and smart card are not critical, and may be modified without departing from the scope of the invention as claimed.

To achieve a trusted computing platform, there is incorporated into the computing platform a physical trusted device whose function is to bind the identity of the platform to reliably measured data that provides an integrity metric of the platform. The trusted device may also (as is described below) act as a trusted display processor. The trusted display processor (or a device with similar properties) is associated with video data at a stage in the video processing beyond the point where data can be manipulated by standard host computer software. This allows the trusted display processor to display data on a display surface without interference or subversion by the host computer software. Thus, the trusted display processor can be certain what image is currently being displayed to the user. The identity and the integrity metric are compared with expected values provided by a trusted party (TP) that is prepared to vouch for the trustworthiness of the platform. If there is a match, the implication is that at least part of the platform is operating correctly, depending on the scope of the integrity metric.

A user verifies the correct operation of the platform before exchanging other data with the platform. A user does this by requesting the trusted device to provide its identity and an integrity metric. (Optionally the trusted device will refuse to provide evidence of identity if it itself was unable to verify correct operation of the platform.) The user receives the proof of identity and the identity metric, and compares them against values which it believes to be true. Those proper values are provided by the TP or another entity that is trusted by the user. If data reported by the trusted device is the same as that provided by the TP, the user trusts the platform. This is because the user trusts the entity. The entity trusts the platform because it has previously validated the identity and determined the proper integrity metric of the platform.

Once a user has established trusted operation of the platform, he exchanges other data with the platform. For a local user, the exchange might be by interacting with some software application running on the platform. For a remote user, the exchange might involve a secure transaction. In either case, the data exchanged is 'signed' by the trusted device. The user can then have greater confidence that data is being exchanged with a platform whose behaviour can be trusted.

The trusted device uses cryptographic processes but does not necessarily provide an external interface to those cryptographic processes. Also, a most desirable implementation would be to make the trusted device tamperproof, to protect secrets by making them inaccessible to other platform functions and provide an environment that is substantially immune to unauthorised modification. Since tamper-proofing is impossible, the best approximation is a trusted device that is tamper-resistant, or tamper-detecting. The trusted device, therefore, preferably consists of one physical component that is tamper-resistant.

Techniques relevant to tamper-resistance are well known to those skilled in the art of security. These techniques include methods for resisting tampering (such as appropriate encapsulation of the trusted device), methods for detecting tampering (such as detection of out of specification voltages, X-rays, or loss of physical integrity in the trusted device casing), and methods for eliminating data when tampering is detected. It will be appreciated that, although tamper-proofing is a most desirable feature of the present invention, it does not enter into the normal operation of the invention and, as such, is beyond the scope of the present invention and will not be described in any detail herein.

The trusted device is preferably a physical one because it must be difficult to forge. It is most preferably tamper-resistant because it must be hard to counterfeit. It typically has an engine capable of using cryptographic processes because it is required to prove identity, both locally and at a distance, and it contains at least one method of measuring some integrity metric of the platform with which it is associated.

Figure 1 illustrates a host computer system in which the host computer is (for example) a Personal Computer, or PC, which operates under the Windows NT™ operating system. According to Figure 1, the host computer 100 is connected to a visual display unit (VDU) 105, a keyboard 110, a mouse 115 and a smartcard reader 120, and a local area network (LAN) 125, which in turn is connected to the Internet 130. Herein, the smartcard reader is an independent unit, although it may be an integral part of the keyboard. The VDU, keyboard, mouse, and trusted switch can be thought of as the human/computer interface (HCI) of the host computer. More specifically, the display, when operating under trusted control, as will be described, can be thought of as part of a 'trusted user interface'. Figure 1 also illustrates a smartcard 122 for use in the present embodiment as will be described.

Figure 2 shows a hardware architecture of the host computer of Figure 1.

According to Figure 2, the host computer 100 comprises a central processing unit (CPU) 200, or main processor, connected to main memory, which comprises RAM 205 and ROM 210, all of which are mounted on a motherboard 215 of the host computer 100. The CPU in this case is a Pentium™ processor. The CPU is connected via a PCI (Peripheral Component Interconnect) bridge 220 to a PCI bus 225, to which are attached the other main components of the host computer 100. The bus 225 comprises appropriate control, address and data portions, which will not be described in detail herein. For a detailed description of Pentium processors and PCI architectures, which is beyond the scope of the present description, the reader is referred to the book, "The Indispensable PC Hardware Handbook", 3rd Edition, by Hans-Peter Messmer, published by Addison-Wesley, ISBN 0-201-40399-4. Of course, the present embodiment is in no way limited to implementation using Pentium processors, Windows™ operating systems or PCI buses.

The other main components of the host computer 100 attached to the PCI bus 225 include: a SCSI (small computer system interface) adaptor connected via a SCSI bus 235 to a hard disk drive 2600 and a CD-ROM drive 2605; a LAN (local area network) adaptor 250 for connecting the host computer 100 to a LAN 125, via which the host computer 100 can communicate with other host computers (not shown), such as file servers, print servers or email servers, and the Internet 130; an IO (input/output) device 225, for attaching the keyboard 110, mouse 115 and smartcard reader 120; and a trusted device 260 (which incorporates the trusted display processor function). The trusted display processor handles all standard display functions plus a number of further tasks, which will be described in detail below. 'Standard display functions' are those functions that one would normally expect to find in any standard host computer 100, for example a PC operating under the Windows NT™ operating system, for displaying an image associated with the operating system or application software.

All the main components, in particular the trusted device 260, are preferably also integrated onto the motherboard 215 of the host computer 100, although, sometimes, LAN adapters 250 and SCSI adapters 230 can be of the plugin type.

Typically, in a personal computer the BIOS program is located in a special reserved memory area 215, the upper 64K of the first megabyte of the system memory (addresses FØØØh to FFFFh), and the main processor is arranged to look at this memory location first, in accordance with an industry wide standard.

The significant difference between the platform and a conventional platform is that, after reset, the main processor is initially controlled by the trusted device, which then hands control over to the platform-specific BIOS program, which in turn initialises all input/output devices as normal. After the BIOS program has executed, control is handed over as normal by the BIOS program to an operating system program, such as Windows NT (TM), which is typically loaded into main memory from a hard disk drive.

Clearly, this change from the normal procedure requires a modification to the implementation of the industry standard, whereby the main processor 200 is directed to address the trusted component (also described as trusted device) 260 to receive its first instructions. This change may be made simply by hard-coding a different address into the main processor 200. Alternatively, the trusted device 260 may be assigned the standard BIOS program address, in which case there is no need to modify the main processor configuration.

It is highly desirable for the BIOS boot block to be contained within the trusted device 260. This prevents subversion of the obtaining of the integrity metric (which could otherwise occur if rogue software processes are present) and prevents rogue software processes creating a situation in which the BIOS (even if correct) fails to build the proper environment for the operating system.

Although, in the preferred form to be described, the trusted device 260 is a single, discrete component, it is envisaged that the functions of the trusted device 260 may alternatively be split into multiple devices on the motherboard, or even integrated into one or more of the existing standard devices of the platform. For example, it is feasible to integrate one or more of the functions of the trusted device into the main processor itself, provided that the functions and their communications cannot be subverted. This, however, would probably require separate leads on the processor for sole use by the trusted functions. Additionally or alternatively, although in the present embodiment the trusted device is a hardware device that is adapted for integration into the motherboard 215, it is anticipated that a trusted device may be implemented as a 'removable' device, such as a dongle, which could be attached to a platform when required. Whether the trusted device is integrated or removable is a matter of design choice. However, where the trusted device is separable, a mechanism for providing a logical binding between the trusted device and the platform should be present.

After system reset, the trusted device 260 performs a secure boot process to ensure that the operating system of the platform 100 (including the system clock and the display on the monitor) is running properly and in a secure manner. During the secure boot process, the trusted device 260 acquires an integrity metric of the computing platform 100. The trusted device 260 can also perform secure data transfer and, for example, authentication between it and a smart card via encryption/decryption and signature/verification. The trusted device 260 can also securely enforce various security control policies, such as locking of the user interface. Moreover, in this arrangement the trusted device 260 also acts as a trusted display processor, providing the standard display functions of a display processor and the extra, non-standard functions for providing a trusted user interface.

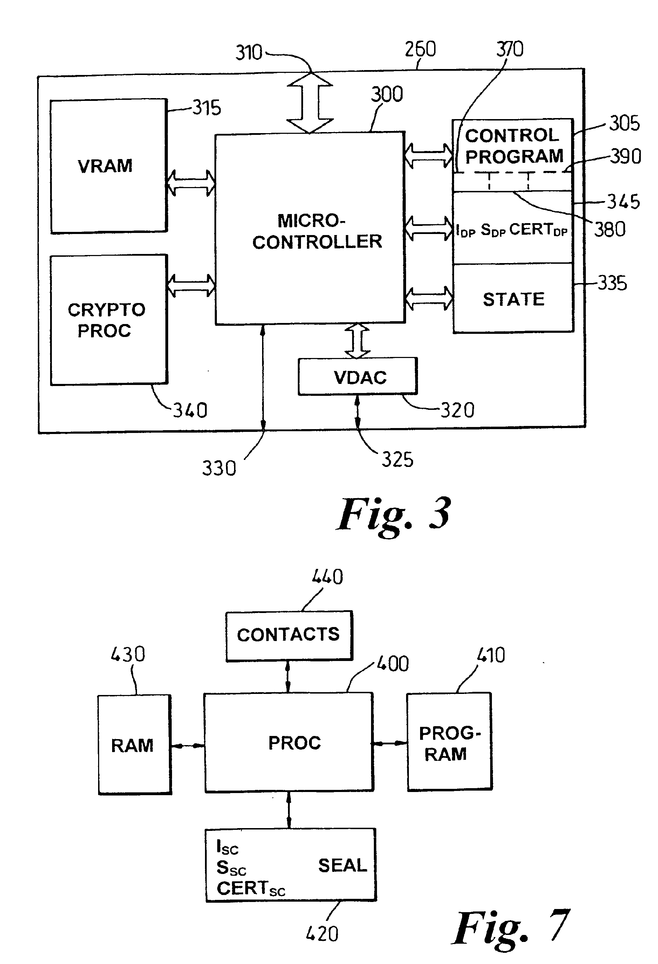

According to Figure 3, the trusted device 260 comprises:
a controller 300;
non-volatile memory 305, for example flash memory, containing respective control program instructions (i.e. firmware) for controlling the operation of the microcontroller 300 (alternatively, the trusted device 260 could be embodied in an ASIC, which would typically provide greater performance and cost efficiency in mass production, but would generally be more expensive to develop and less flexible) - the control program includes a measurement function 370 for acquiring the integrity metric from the computing platform and an authentication function 380 for authenticating a smart card (or other trusted component);
an interface 310 for connecting the trusted device 260 to the PCI bus for receiving information including image data (i.e. graphics primitives) from the CPU 200 and also trusted image data from the smartcard 122, as will be described;
frame buffer memory 315, which comprises sufficient VRAM (video RAM) in which to store at least one full image frame (a typical frame buffer memory 315 is 1-2 Mbytes in size, for screen resolutions of 1280x768 supporting up to 16.7 million colours);
a video DAC (digital to analogue converter) 320 for converting pixmap data into analogue signals for driving the (analogue) VDU 105, which connects to the video DAC 320 via a video interface 325;
volatile memory 335, for example DRAM (dynamic RAM) or more expensive SRAM (static RAM), for storing state information, particularly received cryptographic keys, and for providing a work area for the microcontroller 300;
a cryptographic processor 340, comprising hardware cryptographic accelerators and/or software, arranged to provide the trusted device 260 with a cryptographic identity and to provide authenticity, integrity and confidentiality, guard against replay attacks, make digital signatures, and use digital certificates, as will be described in more detail below; and
non-volatile memory 345, for example flash memory, for storing an identifier I_{DP} of the trusted device 260 (for example a simple text string name - this can be used for indexing and labelling of data relevant to the trusted device, but is in itself insufficient to prove the identity of the platform under trusted conditions), a private key S_{DP} of the trusted device 260, a certificate Cert_{DP} signed and provided by a trusted third party certification agency (TP), such as VeriSign Inc., which binds the trusted device 260 with a signature public-private key pair and a confidentiality public-private key pair and includes the corresponding public keys of the trusted device 260.

A certificate typically contains such information, but not the public key of the CA. That public key is typically made available using a 'Public Key Infrastructure' (PKI). Operation of a PKI is well known to those skilled in the art of security.

The certificate Cert_{DP} is used to supply the public key of the trusted device 260 to third parties in such a way that third parties are confident of the source of the public key and that the public key is a part of a valid public-private key pair. As such, it is unnecessary for a third party to have prior knowledge of, or to need to acquire, the public key of the trusted device 260.

The certificate T_{P} (or, optionally, a further certificate) contains not only the public key of the trusted device 260 but also an authenticated value of the platform integrity metric measured by the trusted party (TP). In later communications sessions, a user of the platform 100 can verify the integrity of the platform 100 by comparing the acquired integrity metric with the authentic integrity metric in the certificate. If there is a match, the user can be confident that the platform 10 has not been subverted. Knowledge of the TP's generally-available public key enables simple verification of the certificate.

The trusted device 260 is equipped with at least one method of reliably measuring or acquiring the integrity metric of the computing platform 100 with which it is associated. In the present embodiment, the integrity metric is acquired by the measurement function 370 by generating a digest of the BIOS instructions in the BIOS memory. Such an acquired integrity metric, if verified as described above, gives a potential user of the platform 100 a high level of confidence that the platform 100 has not been subverted at a hardware, or BIOS program, level. Other known processes, for example virus checkers, will typically be in place to check that the operating system and application program code has not been subverted.

The measurement function 370 has access to: non-volatile memory 305,345 for storing a hash program 390 and a private key S_{DP} of the trusted device 260, and volatile memory 335 for storing acquired integrity metric in the form of a digest 361. In appropriate embodiments, the volatile memory 335 may also be used to store the public keys and associated ID labels 360a-360n of one or more authentic smart cards 122 that can be used to gain access to the platform 100.

In one preferred implementation, as well as the digest, the integrity metric includes a Boolean value, which is stored in volatile memory 335 by the measurement function 370, for reasons that will become apparent.

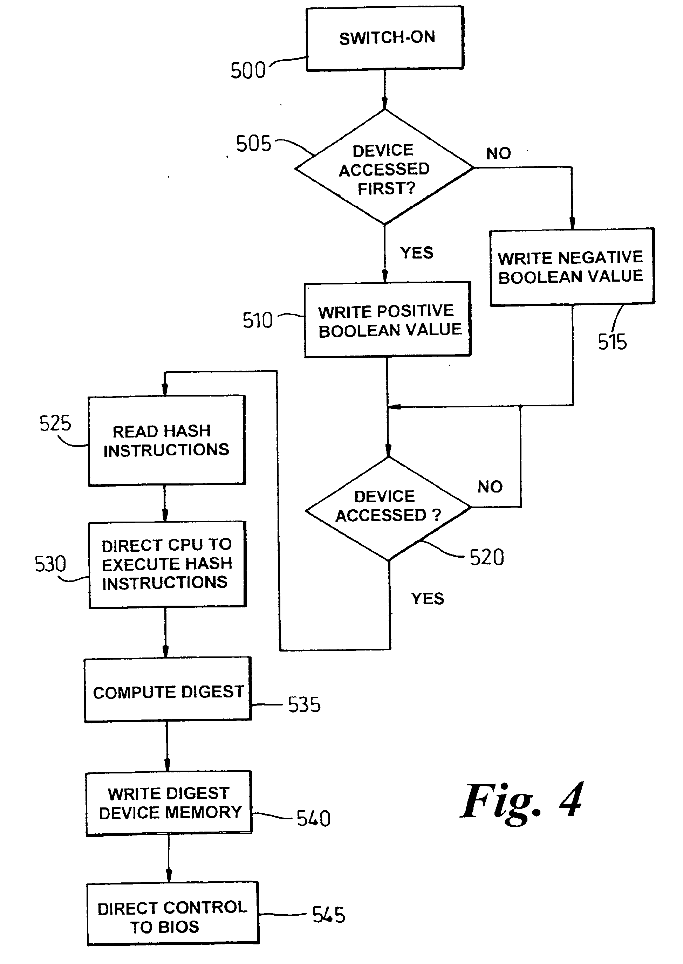

A preferred process for acquiring an integrity metric will now be described with reference to Figure 4.

In step 500, at switch-on, the measurement function 370 monitors the activity of the main processor 200 on the PCI bus 225 to determine whether the trusted device 260 is the first memory accessed. Under conventional operation, a main processor would first be directed to the BIOS memory first in order to execute the BIOS program. However, in accordance with the arrangement shown, the main processor 200 is directed to the trusted device 260, which acts as a memory. In step 505, if the trusted device 260 is the first memory accessed, in step 510, the measurement function 370 writes to volatile memory 335 a Boolean value which indicates that the trusted device 260 was the first memory accessed. Otherwise, in step 515, the measurement function writes a Boolean value which indicates that the trusted device 260 was not the first memory accessed.

In the event the trusted device 260 is not the first memory accessed, there is of course a chance that the trusted device 260 will not be accessed at all. This would be the case, for example, if the main processor 200 were manipulated to run the BIOS program first. Under these circumstances, the platform would operate, but would be unable to verify its integrity on demand, since the integrity metric would not be available. Further, if the trusted device 260 were accessed after the BIOS program had been accessed, the Boolean value would clearly indicate lack of integrity of the platform.

In step 520, when (or if) accessed as a memory by the main processor 200, the main processor 200 reads the stored native hash instructions 390 from the measurement function 370 in step 525. The hash instructions 390 are passed for processing by the main processor 200 over the data bus 225. In step 530, main processor 200 executes the hash instructions 390 and uses them, in step 535, to compute a digest of the BIOS memory 215, by reading the contents of the BIOS memory 215 and processing those contents according to the hash program. In step 540, the main processor 200 writes the computed digest 361 to the appropriate non-volatile memory location 335 in the trusted device 260. The measurement function 370, in step 545, then calls the BIOS program in the BIOS memory 215, and execution continues in a conventional manner.

Clearly, there are a number of different ways in which the integrity metric may be calculated, depending upon the scope of the trust required. The measurement of the BIOS program's integrity provides a fundamental check on the integrity of a platform's underlying processing environment. The integrity metric should be of such a form that it will enable reasoning about the validity of the boot process - the value of the integrity metric can be used to verify whether the platform booted using the correct BIOS. Optionally, individual functional blocks within the BIOS could have their own digest values, with an ensemble BIOS digest being a digest of these individual digests. This enables a policy to state which parts of BIOS operation are critical for an intended purpose, and which are irrelevant (in which case the individual digests must be stored in such a manner that validity of operation under the policy can be established).

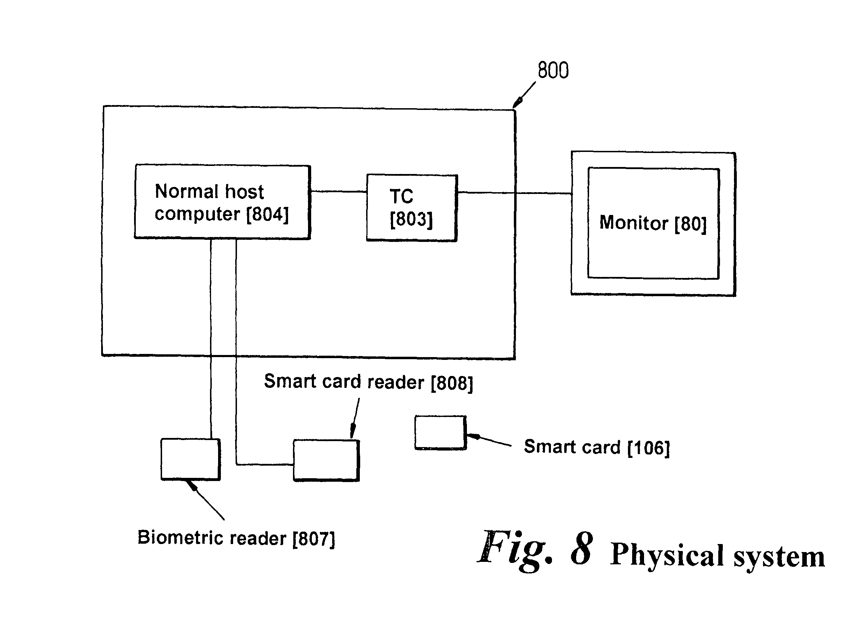

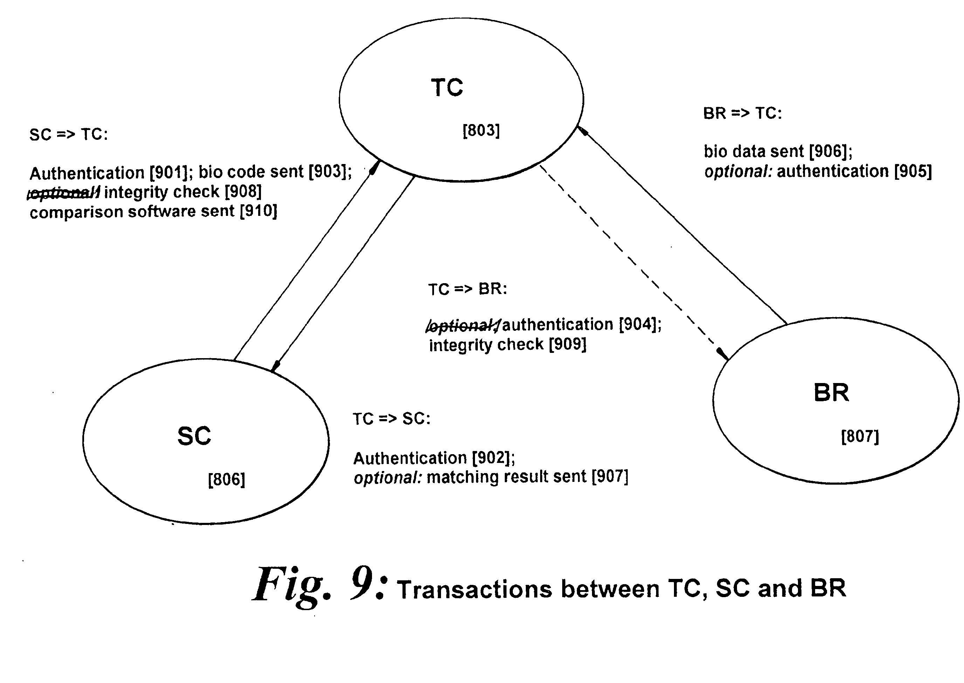

Other integrity checks could involve establishing that various other devices, components or apparatus attached to the platform are present and in correct working order. In one example, the BIOS programs associated with a SCSI controller could be verified to ensure communications with peripheral equipment could be trusted. In another example, the integrity of other devices, for example memory devices or coprocessors, on the platform could be verified by enacting fixed challenge/response interactions to ensure consistent results. Where the trusted device 260 is a separable component, some such form of interaction is desirable to provide an appropriate logical binding between the trusted device 260 and the platform. Also, although in the present embodiment the trusted device 260 utilises the data bus as its main means of communication with other parts of the platform, it is feasible to provide alternative communications paths, such as hard-wired paths or optical paths - such an arrangement is described in greater detail below with reference to Figures 8 and 9. Further, although in the present embodiment the trusted device 260 instructs the main processor 200 to calculate the integrity metric in other embodiments, the trusted device itself is arranged to measure one or more integrity metrics.

Preferably, the BIOS boot process includes mechanisms to verify the integrity of the boot process itself. Such mechanisms are already known from, for example, Intel's draft "Wired for Management baseline specification v 2.0 - BOOT Integrity Service", and involve calculating digests of software or firmware before loading that software or firmware. Such a computed digest is compared with a value stored in a certificate provided by a trusted entity, whose public key is known to the BIOS. The software/firmware is then loaded only if the computed value matches the expected value from the certificate, and the certificate has been proven valid by use of the trusted entity's public key. Otherwise, an appropriate exception handling routine is invoked.

Optionally, after receiving the computed BIOS digest, the trusted device 260 may inspect the proper value of the BIOS digest in the certificate and not pass control to the BIOS if the computed digest does not match the proper value. Additionally, or alternatively, the trusted device 260 may inspect the Boolean value and not pass control back to the BIOS if the trusted device 260 was not the first memory accessed. In either of these cases, an appropriate exception handling routine may be invoked.

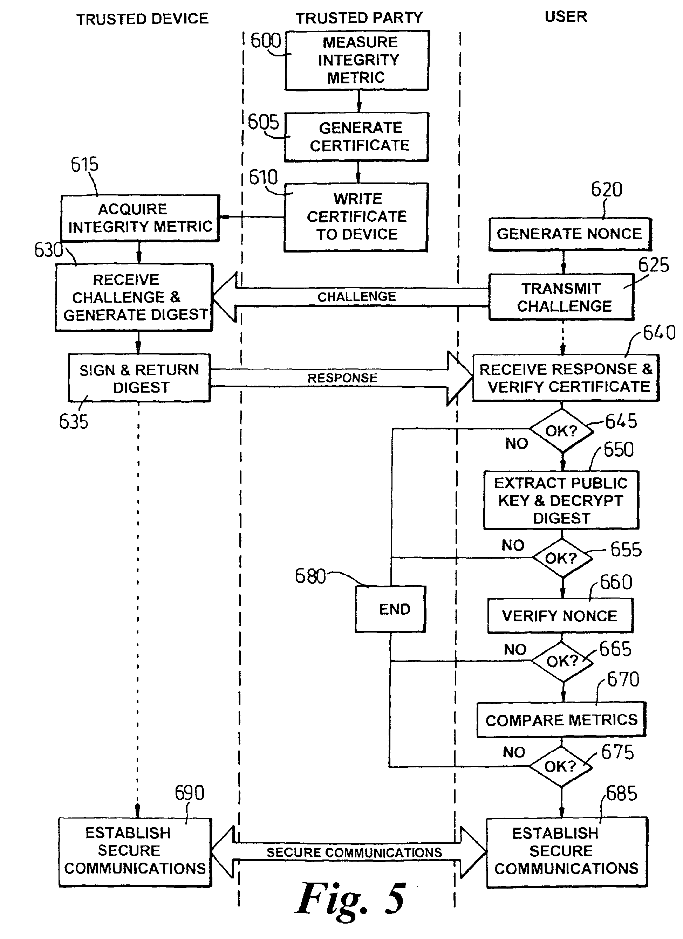

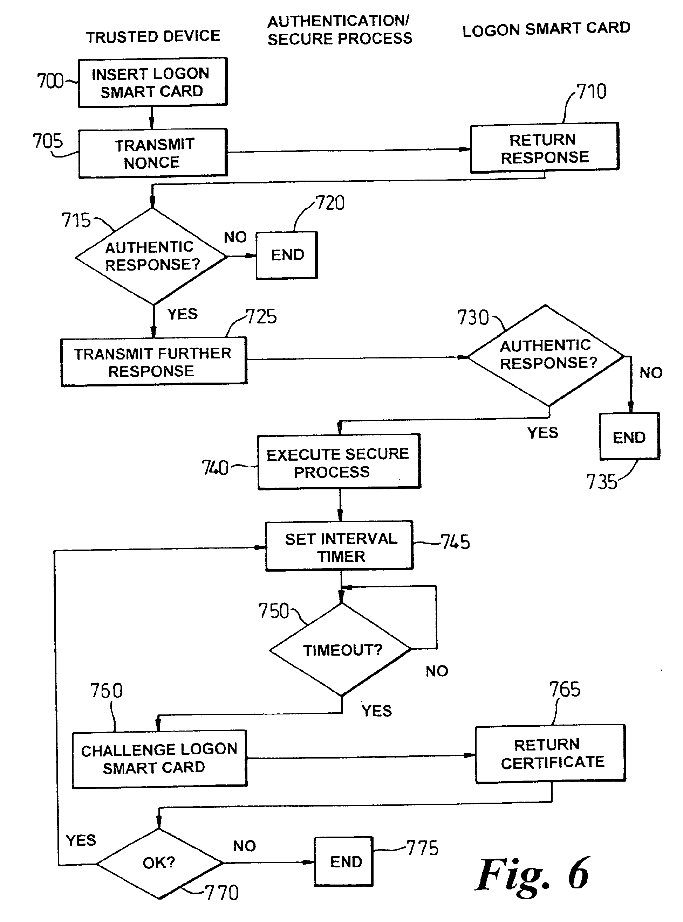

Figure 5 illustrates the flow of actions by a TP, the trusted device 260 incorporated into a platform, and a user (of a remote platform) who wants to verify the integrity of the trusted platform. It will be appreciated that substantially the same steps as are depicted in Figure 5 are involved when the user is a local user. In either case, the user would typically rely on some form of software application to enact the verification. It would be possible to run the software application on the remote platform or the trusted platform. However, there is a chance that, even on the remote platform, the software application could be subverted in some way. Therefore, it is anticipated that, for a high level of integrity, the software application would reside on a smart card of the user, who would insert the smart card into an appropriate reader for the purposes of verification. Figure 5 illustrates the flow of actions for the general case - a more specific flow of actions for verification by a user smart card will be described with reference to Figure 6 further below.

At the first instance, a TP, which vouches for trusted platforms, will inspect the type of the platform to decide whether to vouch for it or not. This will be a matter of policy. If all is well, in step 600, the TP measures the value of integrity metric of the platform. Then, the TP generates a certificate, in step 605, for the platform. The certificate is generated by the TP by appending the trusted device's public key, and optionally its ID label, to the measured integrity metric, and signing the string with the TP's private key.

The trusted device 260 can subsequently prove its identity by using its private key to process some input data received from the user and produce output data, such that the input/output pair is statistically impossible to produce without knowledge of the private key. Hence, knowledge of the private key forms the basis of identity in this case. Clearly, it would be feasible to use symmetric encryption to form the basis of identity. However, the disadvantage of using symmetric encryption is that the user would need to share his secret with the trusted device. Further, as a result of the need to share the secret with the user, while symmetric encryption would in principle be sufficient to prove identity to the user, it would insufficient to prove identity to a third party, who could not be entirely sure the verification originated from the trusted device or the user.

In step 610, the trusted device 260 is initialised by writing the certificate into the appropriate non-volatile memory locations of the trusted device 260. This is done, preferably, by secure communication with the trusted device 260 after it is installed in the motherboard 215. The method of writing the certificate to the trusted device 260 is analogous to the method used to initialise smart cards by writing private keys thereto. The secure communications is supported by a 'master key', known only to the TP, that is written to the trusted device (or smart card) during manufacture, and used to enable the writing of data to the trusted device 260; writing of data to the trusted device 260 without knowledge of the master key is not possible.

At some later point during operation of the platform, for example when it is switched on or reset, in step 615, the trusted device 260 acquires and stores the integrity metric of the platform.

When a user wishes to communicate with the platform, in step 620, he creates a nonce, such as a random number, and, in step 625, challenges the trusted device 260 (the operating system of the platform, or an appropriate software application, is arranged to recognise the challenge and pass it to the trusted device 260, typically via a BIOS-type call, in an appropriate fashion). The nonce is used to protect the user from deception caused by replay of old but genuine signatures (called a 'replay attack') by untrustworthy platforms. The process of providing a nonce and verifying the response is an example of the well-known 'challenge/response' process.

In step 630, the trusted device 260 receives the challenge and creates an appropriate response. This may be a digest of the measured integrity metric and the nonce, and optionally its ID label. Then, in step 635, the trusted device 260 signs the digest, using its private key, and returns the signed digest, accompanied by the certificate Cert_{DP}, to the user.

In step 640, the user receives the challenge response and verifies the certificate using the well known public key of the TP. The user then, in step 650, extracts the trusted device's 260 public key from the certificate and uses it to decrypt the signed digest from the challenge response. Then, in step 660, the user verifies the nonce inside the challenge response. Next, in step 670, the user compares the computed integrity metric, which it extracts from the challenge response, with the proper platform integrity metric, which it extracts from the certificate. If any of the foregoing verification steps fails, in steps 645, 655, 665 or 675, the whole process ends in step 680 with no further communications taking place.

Assuming all is well, in steps 685 and 690, the user and the trusted platform use other protocols to set up secure communications for other data, where the data from the platform is preferably signed by the trusted device 260.

Further refinements of this verification process are possible. It is desirable that the challenger becomes aware, through the challenge, both of the value of the platform integrity metric and also of the method by which it was obtained. Both these pieces of information are desirable to allow the challenger to make a proper decision about the integrity of the platform. The challenger also has many different options available - it may accept that the integrity metric is recognised as valid in the trusted device 260, or may alternatively only accept that the platform has the relevant level of integrity if the value of the integrity metric is equal to a value held by the challenger (or may hold there to be different levels of trust in these two cases).

The techniques of signing, using certificates, and challenge/response, and using them to prove identity, are well known to those skilled in the art of security and therefore need not be described in any more detail herein.

In preferred arrangements of the system, a user employs a smart card 122 to verify a trusted platform. The processing engine of a smartcard suitable for use in accordance with the preferred embodiment is illustrated in Figure 7. The processing engine comprises a processor 400 for enacting standard encryption and decryption functions, to support verification of information received from elsewhere. In the present embodiment, the processor 400 is an 8-bit microcontroller, which has a built-in operating system and is arranged to communicate with the outside world via asynchronous protocols specified through ISO 7816-3, 4, T=0, T=1 and T=14 standards. The smartcard also comprises non-volatile memory 420, for example flash memory, containing an identifier I_{SC} of the smartcard 122, a private key S_{SC}, used for digitally signing data, and a certificate Cert_{SC}, provided by a trusted third party certification agency, which binds the smartcard with public-private key pairs and includes the corresponding public keys of the smartcard 122 (the same in nature to the certificate Cert_{DP} of the trusted device 260). Further, the smartcard contains 'seal' data SEAL in the non-volatile memory 420, which can be represented graphically by the trusted display processor 260 to indicate to the user that a process is operating securely with the user's smartcard, as will be described in detail below. In the present embodiment, the seal data SEAL is in the form of an image pixmap, which was originally selected by the user as a unique identifier, for example an image of the user himself, and loaded into the smartcard 122 using well-known techniques. The processor 400 also has access to volatile memory 430, for example RAM, for storing state information (such as received keys) and providing a working area for the processor 400, and an interface 440, for example electrical contacts, for communicating with a smart card reader.

Seal images can consume relatively large amounts of memory if stored as pixmaps. This may be a distinct disadvantage in circumstances where the image needs to be stored on a smartcard 122, where memory capacity is relatively limited. The memory requirement may be reduced by a number of different techniques. For example, the seal image could comprise: a compressed image, which can be decompressed by the trusted device 260; a thumb-nail image that forms the primitive element of a repeating mosaic generated by the trusted device 260; a naturally compressed image, such as a set of alphanumeric characters, which can be displayed by the trusted device 260 as a single large image, or used as a thumb-nail image as above. In any of these alternatives, the seal data itself may be in encrypted form and require the trusted device 260 to decrypt the data before it can be displayed. Alternatively, the seal data may be an encrypted index, which identifies one of a number of possible images stored by the host computer 100 or a network server. In this case, the index would be fetched by the trusted device 260 across a secure channel and decrypted in order to retrieve and display the correct image. Further, the seal data could comprise instructions (for example PostScript™ instructions) that could be interpreted by an appropriately programmed trusted device 260 to generate an image.

As indicated above, Figure 6 shows the flow of actions in an example of verification of platform integrity by a user interacting with the trusted platform with a smart card 122. As will be described, the process conveniently implements a challenge/response routine. There exist many available challenge/response mechanisms. The implementation of an authentication protocol used in the present embodiment is mutual (or 3-step) authentication, as described in ISO/IEC 9798-3, "Information technology - Security techniques - Entity authentication mechanisms; Part 3; Entity authentication using a public key algorithm", International Organization for Standardization, November 12293. Of course, there is no reason why other authentication procedures cannot be used, for example 2-step or 4-step, as also described in this reference.

Initially, the user inserts their smart card 122 into the smart card reader 120 of the platform in step 700.

Beforehand, a platform configured for use by users of in this way will typically be operating under the control of its standard operating system and executing the authentication process, which waits for a user to insert their smart card 122. Apart from the smart card reader 120 being active in this way, such a platform is typically rendered inaccessible to users by 'locking' the user interface (i.e. the screen, keyboard and mouse).

When the smart card 122 is inserted into the smart card reader 120, the trusted device 260 is triggered to attempt mutual authentication in step by generating and transmitting a nonce A to the smart card 122 in step 705. A nonce, such as a random number, is used to protect the originator from deception caused by replay of old but genuine responses (called a 'replay attack') by untrustworthy third parties.

In response, in step 710, the smart card 122 generates and returns a response comprising the concatenation of: the plain text of the nonce A, a new nonce B generated by the smart card 122, an ID of the trusted device 260 and some redundancy; the signature of the plain text, generated by signing the plain text with the private key of the smart card 122; and a certificate containing the ID and the public key of the smart card 122.

The trusted device 260 authenticates the response by using the public key in the certificate to verify the signature of the plain text in step 715. If the response is not authentic, the process ends in step 720. If the response is authentic, in step 725 the trusted device 260 generates and sends a further response including the concatenation of: the plain text of the nonce A, the nonce B, an ID of the smart card 122 and the acquired integrity metric; the signature of the plain text, generated by signing the plain text using the private key of the trusted device 260; and the certificate comprising the public key of the trusted device 260 and the authentic integrity metric, both signed by the private key of the TP.

The smart card 122 authenticates this response by using the public key of the TP and comparing the acquired integrity metric with the authentic integrity metric, where a match indicates successful verification, in step 730. If the further response is not authentic, the process ends in step 735.

If the procedure is successful, both the trusted device 260 has authenticated the smart card 122 and the smart card 122 has verified the integrity of the trusted platform and, in step 740, the authentication process executes the secure process for the user.

In certain types of interaction, the authentication process can end at this point. However, if a session is to be continued between the user and the trusted platform, it is desirable to ensure that the user remains authenticated to the platform.

Where continued authentication is required, the authentication process sets an interval timer in step 745. Thereafter, using appropriate operating system interrupt routines, the authentication process services the interval timer periodically to detect when the timer meets or exceeds a pre-determined timeout period in step 750.

Clearly, the authentication process and the interval timer run in parallel with the secure process. When the timeout period is met or exceeded, the authentication process triggers the trusted device 260 to re-authenticate the smart card 122, by transmitting a challenge for the smart card 122 to identify itself in step 760. The smart card 122 returns a certificate including its ID and its public key in step 765. In step 770, if there is no response (for example, as a result of the smart card 122 having been removed) or the certificate is no longer valid for some reason (for example, the smart card has been replaced with a different smart card), the session is terminated by the trusted device 260 in step 775. Otherwise, in step 770, the process from step 745 repeats by resetting the interval timer.

Additionally, or alternatively, in some embodiments it may be required that the user profile is encrypted and signed to protect privacy and integrity. If so, a secure data transfer protocol may be needed between the trusted device 260 and the smart card 122. There exist many available mechanisms for transferring secure credentials between two entities. A possible implementation, which may be used in the present embodiment, is secure key transport mechanisms from ISO/IEC DIS 11770-3, "Information technology - Security techniques - Key management - Part 3: Mechanisms using asymmetric techniques", International Organization for Standardization, March 1997.

Modifications of this verification process using other well-known challenge and response techniques can easily be achieved by the skilled person. Similarly, alternative verification processes can be used by parties interacting with the platform in a different manner (that is, other than as a user equipped with a smart card).

As described above, the trusted device 260 lends its identity and trusted processes to the host computer and the trusted display processor has those properties by virtue of its tamper-resistance, resistance to forgery, and resistance to counterfeiting. Only selected entities with appropriate authentication mechanisms are able to influence the processes running inside the trusted device 260. Neither an ordinary user of the host computer, nor any ordinary user or any ordinary entity connected via a network to the host computer may access or interfere with the processes running inside the trusted device 260. The trusted device 260 has the property of being "inviolate".

It will be apparent from Figure 3 that the frame buffer memory 315 is only accessible by the trusted display processor 260 itself, and not by the CPU 200. This is an important feature of the preferred embodiment, since it is imperative that the CPU 200, or, more importantly, subversive application programs or viruses, cannot modify the pixmap during a trusted operation. Of course, it would be feasible to provide the same level of security even if the CPU 200 could directly access the frame buffer memory 315, as long as the trusted display processor 260 were arranged to have ultimate control over when the CPU 200 could access the frame buffer memory 315. Obviously, this latter scheme would be more difficult to implement.

A typical process by which graphics primitives are generated by a host computer 100 will now be described by way of background. Initially, an application program, which wishes to display a particular image, makes an appropriate call, via a graphical API (application programming interface), to the operating system. An API typically provides a standard interface for an application program to access specific underlying display functions, such as provided by Windows NT™, for the purposes of displaying an image. The API call causes the operating system to make respective graphics driver library routine calls, which result in the generation of graphics primitives specific to a display processor, which in this case is the trusted display processor 260. These graphics primitives are finally passed by the CPU 200 to the trusted display processor 260. Example graphics primitives might be 'draw a line from point x to point y with thickness z' or 'fill an area bounded by points w, x, y and z with a colour a'.

The control program of the microcontroller 300 controls the microcontroller to provide the standard display functions to process the received graphics primitives, specifically:
receiving from the CPU 200 and processing graphics primitives to form pixmap data which is directly representative of an image to be displayed on the VDU 105 screen, where the pixmap data generally includes intensity values for each of the red, green and blue dots of each addressable pixel on the VDU 105 screen;
storing the pixmap data into the frame buffer memory 315; and periodically, for example sixty times a second, reading the pixmap data from the frame buffer memory 315, converting the data into analogue signals using the video DAC and transmitting the analogue signals to the VDU 105 to display the required image on the screen.

Apart from the standard display functions, the control program includes a function to mix display image data deceived from the CPU 200 with trusted image data to form a single pixmap. The control program also manages interaction with the cryptographic processor.

The trusted display processor 260 forms a part of the overall 'display system' of the host computer 100; the other parts typically being display functions of the operating system, which can be 'called' by application programs and which access the standard display functions of the graphics processor, and the VDU 105. In other words, the 'display system' of a host computer 100 comprises every piece of hardware or functionality which is concerned with displaying an image.

A specific embodiment of the invention will now be described, with reference to Figures 8 to 10. Other secure tokens (handheld PC, or other item capable of being held personally by a user) can be used, though for convenience only smart cards are discussed here. The trusted computing platform described is a personal computer, but any platform capable of the requisite functionality can be used.

Figure 8 illustrates the physical system. Trusted platform 800 has the elements of trusted platform 100 described in Figure 1 (and below). Only elements of specific relevance to the present invention are shown in Figure 8. The system according to the invention has certain additional elements, as are described below.

The trusted component (TC) 803 is in the path between normal computer CPU 804 and the display 801. This enables the TC 103 to write reliably to the display, without fear of subversion from normal software, including the operating system is the name described with reference to Figure 1 to 7. The host computer is connected to a keyboard 805 that has a built-in smart card reader 808. A smart card (SC) 806 is plugged into the keyboard and can be accessed by the host CPU 804 and the TC 803. The smart card 806 is able to communicate securely with the TC 803. The biometric reader (BR 807 is connected to the keyboard and can be accessed by the host CPU 804 and the TC 803. The biometric reader may in alternative arrangements be incorporated physically into the smart card reader 808 or the smart card 806 or connected in some other way to the host CPU 804.

The specific form of biometric reader to be used is not relevant to the invention, and will not be discussed in detail here. The biometric reader 808 must be capable of measuring a parameter individual to a user, and providing data which will allow the user to be identified, generally by matching against earlier recorded data measured for the same user. Alternatives already known are fingerprint readers, iris pattern detectors, signature readers, voice print detectors, and many others - the present invention can employ any of the above.

In the embodiment described, the smart card 806 has a cryptographic identity (as shown in Figure 7). It is preferred also (though again not essential in all embodiments) that the biometric reader 807 has, in addition to its biometric functionality, the functionality of a secure token as shown in Figure 7 - that is, a cryptographic identity, functionality to allow it to authenticate a trusted platform or secure token, and each cryptographic functionality as needed to allow secure communication with another system element.

Figure 9 illustrates diagrammatically the transaction between TC, SC and BR. Upon sign-on using the smart card 806, there is mutual authentication between the TC 803 and the smart card 901, 902 and certificates are exchanged, with the smart card checking that the integrity of the TC is satisfactory before proceeding further 908. The TC stores a unique identity for the smart card, which is preferably the certificate of the smart card public (verification) key. A bio code 1016 is transferred from SC to TC 903 encrypted with a symmetric session key set up for this purpose. Optionally, comparison software is also sent from the SC to the TC 910. The TC authenticates to the BR and optionally BR authenticates to TC [904, 905] and certificates are exchanged. Optionally, this can be combined with an integrity check by the TC on the BR 909 or vice versa. The biometric data is then sent from BR to TC, encrypted with a symmetric session key set up for this purpose 906. The TC then compares the biometric data with the bio code, using trusted biometric comparison software 1011. Optionally, the TC sends the SC the result of the biometric match, signed using the TC's private signing key 907. Optionally, the TC or the SC take a metering record of the transaction 1014, 1015.

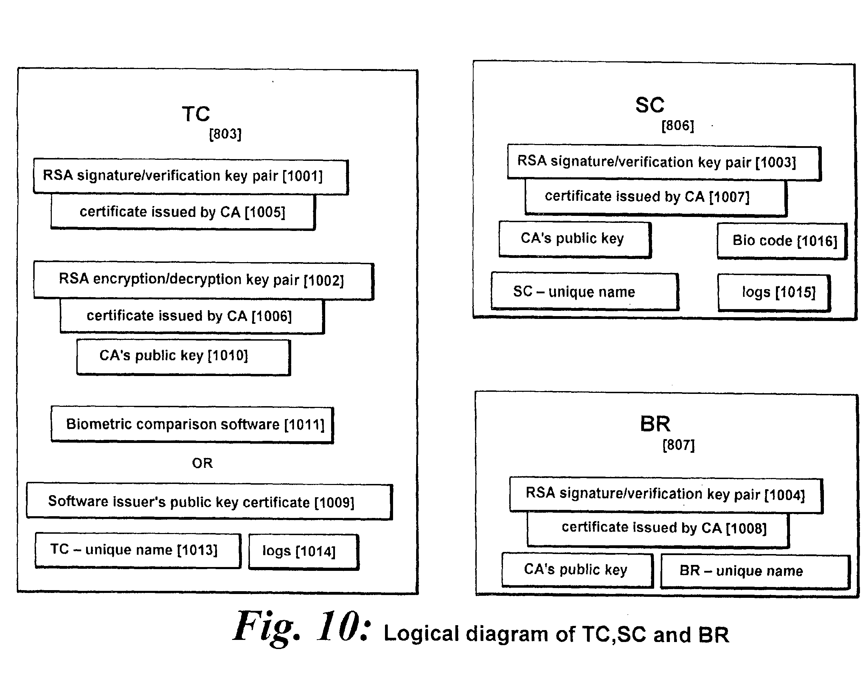

Steps of authentication are essentially as shown above with reference to Figures 5 and 6. Communication using a symmetric key is well-known in the cryptographic art, and does not need to be described further here
Figure 10 is a logical diagram of TC 803, SC 806 and BR 807, A certification authority (CA) issues certificates corresponding to public and private key pairs associated with the TC and SC 1005, 1006, 1007 and possibly the BR 1008. Each end user has a smart card 806 equipped with an RSA key pair for signature and verification 1003. The trusted component has two RSA key pairs respectively for signature-verification and encryption-decryption 1001,1002. The BR need not, in all embodiments, be trustworthy or secure (although this is preferable). In the arrangement preferred, it does not itself implement the biometric algorithm but only reads the biometric data from the user. The reader is created by a trusted entity and this means it has been given a public/private key pair 1004 supported by a CA's certificate. As indicated above, the biometric reader can be of any kind (for example iris recognition, retina, or voice).

A preferred protocol for this procedure is described below. In the protocol the following notation will be used:-
- N_{n-X} - a nonce issued by the entity X (X = {SC, TC} with a number n;
- Dn - a data element, containing some extra information that may need to be transmitted in a real application; such data elements are included for generality, and the value may be null;
- SK- a session key used for protecting transmission ofBio data (BD) (for example, fingerprint data) and Bio code (BC). This session key is a shared key for symmetric encryption-decryption, eg DES.
- m1, m2 - a concatenation of two data elements m1 and m2;
- Sₓ (m) - a signature on a data element m signed with a private signature key of the entity X (X = {SC, TC};
- Eₓ (m) - a data element m encrypted via an asymmetric algorithm by using the public encryption key of the entity X (X = {TC});
- E'_{K}(m) - a data element m encrypted via a symmetric algorithm by using the key K;
- A → B:m — a data element m is transferred from entity A (A = {SC, TC} to entity B (B = {SC, TC});
- Cert (X, Y) - a certificate of the entity X's public key issued by the CA for the purpose Y, where X = {SC, TC} and Y = {V, E} (V - verification and E - encryption).

A preferred protocol that allows the SC and TC to work together to authenticate the user is as follows (stages A - D):
**A) Mutual authentication between SC and TC and transfer of bio code from SC to TC**
   SC → TC: N_{1-SC}, D₁
   TC → SC: N_{2-TC}, Cert (TC,V), Cert (TC, E), D₂, S_{TC} (N_{1-SC}, N_{2-TC}, SC, D₃)
   SC → TC: E_{TC}(SK1), Cert (SC, V), D₄, E_{SK1} (N_{1-SC}, N_{2-TC}, BC, D₅), Ssc (N_{1-SC}, N_{2-TC}, TC, E_{TC} (SK1), D₆)
   The TC implements the biometric algorithm and compares the bio Data with the bio Code. In order to trust that this information is actually correct from the true source and not a result of an impostor's attack, the data must be sent from the SC and the BR in a secure way. The SC and TC should mutually authenticate each other at the beginning of a session. The bio code also must be transferred from the SC to the TC. This will reduce the number of transfers between SC and TC. The bio code will be discarded from the TC at the end of a session. The cipher used for encryption does not need to be specified (one possibility is use of CBC mode to take advantage of the random (nonce provision).
**B) Mutual authentication between BR and TC and establishment of a session key (optional)**
   BR→ TC: N_{3-BR}, D7
   TC → BR: N_{4-TC}, Cert (TC, V), Cert (TC, E), D₈, S_{TC} (N_{3-BR}, N_{4-TC}, BR, D₉)
   BR → TC: E_{TC}(SK2), Cert (BR, V), D₁₀, S_{BR}, (N_{3-BR}, N_{4-TC}, TC, E_{TC}(SK2), D₁₁)
   The TC and BR shall authenticate each other. It is desirable for the TC to authenticate the BR, particularly if the BR is trusted and it can prove that user data is held securely - the TC can then ensure that bio data will not be collected and transferred to an illegitimate user or purpose. Authentication of the TC by the BR prevents transfer of data from the BR to an illegitimate TC. It is strongly desirable for the TC to be able to tell the user that the BR is a valid one, so he or she can put his finger on it or allow other biometric information to be taken with security. A reason for authenticating the BR (and not assuming that a specific BR will be attached on the PC) is because of the nature of distributed environments. It may be desirable that the BR and the user are not physically co-located with TC (eg public client platforms at airports).
   The solution described above for this stage is strong authentication, which is one solution for integrity checking between the TC and BR (others are possible, including the TC checking out the integrity of the BR, or vice versa in an analogous way to the SC checking the integrity of the TC, or vice versa); a weaker approach can be used in some cases such as asking for another type of identity. For example, this stage of mutual authentication may not be necessary if an integrity check is included within the trusted computing platform and the BR is part of the trusted computing platform; mutual authentication is much more important for "plug-in" biometric readers.
   If this stage is not carried out, the establishment of a key is to be used for encryption of the biometric data needs to be incorporated into the protocol shown for the following stage, ie where the biometric data is set from BR to TC.
**C) Biometric data is sent from BR to TC**
   - TC → BR:: N_{5-TC}, D₁₂
   - BR → TC:: N_{6-BR}, D₁₃, E_{SK2} (N_{5-TC}, N_{6-BR}, BR, TC, BD, D₁₄)

   A PC initialises an authentication request by sending a message to the user, which then uses the biometric reader. The BR collects the biometric data (BD) and sends it to the TC then the TC does the comparison resulting to a match or not. The Biometric data is sent encrypted with the session key SK2 set up previously.
**D) TC sends SC the result of the biometric match (optional)**
   - SC → TC:: N_{7-SC}, D₁₅
   - TC → SC:: S_{TC} (N_{7-SC}, SC, match_result,D₁₆), D₁₇

   One way authentication is included within this stage. The result of the match is displayed on the screen or if required is communicated by the TC to the smart card informing it of the correct identification. *match_result* could be a simple affirmative or negative, or something more complex indicating how closely the biometric data and stored template match
   The skilled man will appreciate that many variations on the above are possible. For example, if the smart card is combined together with the biometric reader, a simplified protocol can be employed. Anotherpossibility is for the biometric data for matching to be held remotely under control of another trusted platform, to be accessed by a secure information exchange between the two trusted platforms. These and other approaches will be recognised as fully compatible with the invention as here described and claimed.

## Claims

1. A data processing system adapted to authenticate a user, the system comprising:
a biometric reader (807);
a token reader (808); and
a computing platform (800) comprising a main platform processor (804) and a trusted component (803) said data processing system **characterized by** the trusted component having a secure processor (300) protected from physical and logical interference,
a non-volatile first memory (345) for holding a private key (1001) of the trusted component and a certificate (1005) of the corresponding public key, and
a second memory (335),
the trusted component (803) being operative upon initiation of the platform to acquire a value of an integrity metric of the computing platform and store it in to the second memory;
wherein the trusted component (803) is further operative to authenticate a user by:
communicating with the token reader (808) to:
participate in mutual authentication with a secure token (106) according to a cryptographic protocol that makes use of the private key (1001) and certificate (1005) stored in the first memory (345),
provide the integrity metric stored in the second memory (335) to the secure token (106) wherein the secure token carries out an integrity check on the computing platform (800) by comparing the integrity metric value with an authentic value of the computing platform integrity contained in said certificate, and in case of a match
retrieve previously captured user biometric information from the secure token (106),
communicating with the biometric reader (807) to authenticate the biometric reader and obtain newly captured user biometric data.
comparing the previously captured user biometric information and the newly captured user biometric data whereby to authenticate the user if the previously captured user biometric information and the newly captured user biometric data match.

2. A data processing system as claimed in claim 1, wherein the trusted component (803) and the biometric reader (807) are adapted for mutual authentication in accordance with a cryptographic protocol.

3. A data processing system as claimed in claim 2, wherein the newly captured user biometric data is arranged to be communicated securely between the biometric reader (807) and the trusted component (803) under a session key.

4. A data processing system as claimed in claim 1, wherein the previously captured user biometric information is arranged to be communicated securely between the secure token (106) and the trusted component (803) under a session key.

5. A data processing system as claimed in claim 1, wherein the trusted component (803) is arranged to retrieve from the secure token (106) code for comparing biometric data and to delete this code after use.

6. A data processing system as claimed in claim 1, wherein the trusted component (103) is arranged to cryptographically sign a comparison of biometric data and provide the signed comparison to the secure token (106).

7. A method of authenticating a user by a data processing system comprising a biometric reader (807), a token reader (808), and a computing platform containing a main processor (804) and a trusted component (803), the trusted component (803) comprising a secure processor (300) protected from physical and logical interference, a non-volatile first memory (345) for holding a private key (1001) of the trusted component and a certificate (1005) of the corresponding public key, and a second memory (335); the method comprising:
upon initiation of the platform, the trusted component (803) acquiring a value of an integrity metric of the platform and storing it in to the second memory (335);
the trusted component (803) communicating with the token reader to participate in mutual authentication with a secure token (106) containing previously captured user biometric data, the mutual authentication being effected in accordance with a cryptographic protocol that makes use of the private key (1001) and certificate (1005) stored in the first memory (345) to authenticate the trusted component to the secure token;
the trusted component (803) providing the integrity-metric value stored in the second memory (335) to the secure token (106) and the secure token comparing this value with an authentic value of the computing platform integrity contained in said certificate and in case of a match;
the trusted component (803) communicating with the biometric reader (807) to authenticate the biometric reader (807) and to receive therefrom user biometric data captured by the biometric reader;
the token (106) transferring the previously captured user biometric data to the trusted component (803);
the trusted component (803) comparing the authentic user biometric data with the captured user biometric data; and
the trusted component (803) authenticating the user on the basis of the biometric data comparison.

8. A method as claimed in claim 7, wherein the biometric reader (807) and the trusted component (803) communicate in accordance with a cryptographic protocol to mutually authenticate each other.

9. A method as claimed in claim 7, wherein the trusted component (803) communicates securely with the secure token (106) under a session key.

10. A method as claimed in claim 7, wherein the trusted component (803) communicates securely with the biometric reader (807) under a session key.

11. A method as claimed in claim 7, further comprising the trusted component (803) retrieving from the secure token (106) code for comparing biometric data, and deleting this code after use.

12. A method as claimed in claim 7, further comprising an earlier step of a trusted third party validating the previously captured user biometric data.

## Patentansprüche

1. Ein Datenverarbeitungssystem, das angepasst ist, um einen Benutzer zu authentifizieren, wobei das System folgende Merkmale aufweist:
einen Biometrieleser (807);
einen Token-Leser (808); und
eine Rechenplattform (800), die einen Hauptplattformprozessor (804) und eine vertrauenswürdige Komponente (803) aufweist, wobei das Datenverarbeitungssystem **dadurch gekennzeichnet ist, dass** die vertrauenswürdige Komponente einen sicheren Prozessor (300) aufweist, der vor einer physischen und logischen Störung geschützt ist,
einen nichtflüchtigen ersten Speicher (345) zum Halten eines privaten Schlüssels (1001) der vertrauenswürdigen Komponente und eines Zertifikats (1005) des entsprechenden öffentlichen Schlüssels, und
einen zweiten Speicher (335),
wobei die vertrauenswürdige Komponente (803) nach der Initiierung der Plattform wirksam ist, um einen Wert einer Integritätsmetrik der Rechenplattform zu erwerben und denselben in den zweiten Speicher zu speichern;
wobei die vertrauenswürdige Komponente (803) ferner wirksam ist, um einen Benutzer zu authentifizieren, durch:
Kommunizieren mit dem Token-Leser (808), zum:
Teilnehmen an der gegenseitigen Authentifizierung mit einem sicheren Token (106) gemäß einem kryptographischen Protokoll, das den privaten Schlüssel (1001) und das Zertifikat (1005) verwendet, die in dem ersten Speicher (345) gespeichert sind,
Liefern der Integritätsmetrik, die in dem zweiten Speicher (335) gespeichert ist, zu dem sicheren Token (106), wobei der sichere Token eine Integritätsprüfung an der Rechenplattform (800) ausführt, durch Vergleichen des Integritätsmetrikwerts mit einem authentischen Wert der Rechenplattformintegrität, der in dem Zertifikat enthalten ist, und in dem Fall einer Übereinstimmung,
Wiedergewinnen von vorangehend erfassten Benutzerbiometrieinformationen aus dem sicheren Token (106),
Kommunizieren mit dem Biometrieleser (807), um den Biometrieleser zu authentifizieren und neu erfasste Benutzerbiometriedaten zu erhalten,
Vergleichen der vorangehend erfassten Benutzerbiometrieinformationen und der neu erfassten Benutzerbiometriedaten, wodurch der Benutzer authentifiziert wird, wenn die vorangehend erfassten Benutzerbiometriedaten und die neu erfassten Benutzerbiometriedaten übereinstimmen.

2. Ein Datenverarbeitungssystem gemäß Anspruch 1, bei dem die vertrauenswürdige Komponente (803) und der Biometrieleser (807) für eine gegenseitige Authentifizierung gemäß einem kryptographischen Protokoll angepasst sind.

3. Ein Datenverarbeitungssystem gemäß Anspruch 2, bei dem die neu erfassten Benutzerbiometriedaten angeordnet sind, um sicher zwischen dem Biometrieleser (807) und der vertrauenswürdigen Komponente (803) unter einem Sitzungsschlüssel kommuniziert zu werden.

4. Ein Datenverarbeitungssystem gemäß Anspruch 1, bei dem die vorangehend erfassten Benutzerbiometrieinformationen angeordnet sind, um sicher zwischen dem sicheren Token (106) und der vertrauenswürdigen Komponente (803) unter einem Sitzungsschlüssel kommuniziert zu werden.

5. Ein Datenverarbeitungssystem gemäß Anspruch 1, bei dem die vertrauenswürdige Komponente (803) angeordnet ist, um aus dem sicheren Token (106) einen Code zum Vergleichen biometrischer Daten wiederzugewinnen und diesen Code nach der Verwendung zu löschen.

6. Ein Datenverarbeitungssystem gemäß Anspruch 1, bei dem die vertrauenswürdige Komponente (103) angeordnet ist, um einen Vergleich biometrischer Daten kryptographisch zu signieren und den signierten Vergleich zu dem sicheren Token (106) zu liefern.

7. Ein Verfahren zum Authentifizieren eines Benutzers durch ein Datenverarbeitungssystem, das einen Biometrieleser (807), einen Token-Leser (808) und eine Rechenplattform aufweist, die einen Hauptprozessor (804) und eine vertrauenswürdige Komponente (803) enthält, wobei die vertrauenswürdige Komponente (803) einen sicheren Prozessor (300), der vor physischer und logischer Störung geschützt ist, einen nichtflüchtigen, ersten Speicher (345) zum Halten eines privaten Schlüssels (1001) der vertrauenswürdigen Komponente und eines Zertifikats (1005) des entsprechenden öffentlichen Schlüssels, und einen zweiten Speicher (335) aufweist; wobei das Verfahren folgende Schritte aufweist:
nach dem Initiieren der Plattform, Erwerben eines Werts einer Integritätsmetrik der Plattform durch die vertrauenswürdige Komponente (803) und Speichern desselben in den zweiten Speicher (335);
Kommunizieren der vertrauenswürdigen Komponente (803) mit dem Token-Leser, um an einer gegenseitigen Authentifizierung mit einem sicheren Token (106) teilzunehmen, der vorangehend erfasste Benutzerbiometriedaten enthält, wobei die gegenseitige Authentifizierung bewirkt wird gemäß einem kryptographischen Protokoll, das den privaten Schlüssel (1001) und das Zertifikat (1005) verwendet, die in dem ersten Speicher (345) gespeichert sind, um die vertrauenswürdige Komponente zu dem sicheren Token zu authentifizieren;
Liefern des Integritätsmetrikwerts durch die vertrauenswürdige Komponente (803), der in dem zweiten Speicher (335) gespeichert ist, zu dem sicheren Token (106), und Vergleichen dieses Werts durch den sicheren Token mit einem authentischen Wert der Rechenplattformintegrität, die in dem Zertifikat enthalten ist, und in dem Fall einer Übereinstimmung:
Kommunizieren der vertrauenswürdigen Komponente (803) mit dem Biometrieleser (807), um den Biometrieleser (807) zu authentifizieren und von demselben Benutzerbiometriedaten zu empfangen, die durch den Biometrieleser erfasst werden;
Übertragen der vorangehend erfassten Benutzerbiometriedaten durch den Token (106) zu der vertrauenswürdigen Komponente (803);
Vergleichen der authentischen Benutzerbiometriedaten mit den erfassten Benutzerbiometriedaten durch die vertrauenswürdige Komponente (803); und
Authentifizieren des Benutzers durch die vertrauenswürdige Komponente (803) auf der Basis des Biometriedatenvergleichs.

8. Ein Verfahren gemäß Anspruch 7, bei dem der Biometrieleser (807) und die vertrauenswürdige Komponente (803) gemäß einem kryptographischen Protokoll kommunizieren, um einander gegenseitig zu authentifizieren.

9. Ein Verfahren gemäß Anspruch 7, bei dem die vertrauenswürdige Komponente (803) sicher mit dem sicheren Token (106) unter einem Sitzungsschlüssel kommuniziert.

10. Ein Verfahren gemäß Anspruch 7, bei dem die vertrauenswürdige Komponente (803) sicher mit dem Biometrieleser (807) unter einem Sitzungsschlüssel kommuniziert.

11. Ein Verfahren gemäß Anspruch 7, das ferner das Wiedergewinnen eines Codes aus dem sicheren Token (106) durch die vertrauenswürdige Komponente (803) zum Vergleichen von Biometriedaten und das Löschen dieses Codes nach der Verwendung aufweist.

12. Ein Verfahren gemäß Anspruch 7, das ferner einen früheren Schritt einer vertrauenswürdigen dritten Partei aufweist, die die vorangehend erfassten Benutzerbiometriedaten validiert.

## Revendications

1. Système de traitement de données apte à authentifier un utilisateur, le système comprenant :
un lecteur biométrique (807) ;
un lecteur de jeton (808) ; et
une plateforme informatique (800) qui comprend un processeur de plate-forme principal (804) et un composant de confiance (803), ledit système de traitement de données étant **caractérisé en ce que** le composant de confiance comprend :
un processeur sécurisé (300) protégé vis-à-vis des interférences physiques et logiques,
une première mémoire non volatile (345) destinée à contenir une clé privée (1001) du composant de confiance et un certificat (1005) de la clé publique correspondante, et
une seconde mémoire (335),
le composant de confiance (803) étant opérationnel lors d'un lancement de la plate-forme de manière à saisir une valeur d'une métrique d'intégrité de la plateforme informatique et à la stocker dans la seconde mémoire ;
dans lequel le composant de confiance (803) est en outre opérationnel de manière à authentifier un utilisateur en :
communiquant avec le lecteur de jeton (808) de manière à :
participer à une authentification mutuelle avec un jeton sécurisé (106) selon un protocole cryptographique qui se sert de la clé privée (1001) et d'un certificat (1005) stocké dans la première mémoire (345),
fournir la métrique d'intégrité stockée dans la seconde mémoire (335) au jeton sécurisé (106) dans lequel le jeton sécurisé procède à un contrôle d'intégrité sur la plateforme informatique (800) en comparant la valeur de la métrique d'intégrité à une valeur authentique de l'intégrité de la plateforme informatique contenue dans ledit certificat, et en cas de correspondance :
rechercher les informations biométriques d'utilisateur précédemment saisies à partir du jeton sécurisé (106),
communiquant avec le lecteur biométrique (807) de manière à authentifier le lecteur biométrique et à obtenir des données biométriques d'utilisateur nouvellement saisies,
comparant les informations biométriques d'utilisateur précédemment saisies et les données biométriques d'utilisateur nouvellement saisies, de manière à authentifier de ce fait l'utilisateur si les informations biométriques d'utilisateur précédemment saisies et les données biométriques d'utilisateur nouvellement saisies correspondent.

2. Système de traitement de données selon la revendication 1, dans lequel le composant de confiance (803) et le lecteur biométrique (807) sont adaptés à une authentification mutuelle selon un protocole cryptographique.

3. Système de traitement de données selon la revendication 2, dans lequel les données biométriques d'utilisateur nouvellement saisies sont agencées de façon à être communiquées de manière sécurisée entre le lecteur biométrique (807) et le composant de confiance (803) sous une clé de session.

4. Système de traitement de données selon la revendication 1, dans lequel les informations biométriques d'utilisateur précédemment saisies sont agencées de façon à être communiquées de manière sécurisée entre le jeton sécurisé (106) et le composant de confiance (803) sous une clé de session.

5. Système de traitement de données selon la revendication 1, dans lequel le composant de confiance (803) est agencé de manière à rechercher un code à partir du jeton sécurisé (106) de façon à comparer les données biométriques, et à effacer ce code après utilisation.

6. Système de traitement de données selon la revendication 1, dans lequel le composant de confiance (103) est agencé de manière à signer de façon cryptographique une comparaison des données biométriques, et à fournir la comparaison signée au jeton sécurisé (106).

7. Procédé d'authentification d'un utilisateur par un système de traitement de données comprenant un lecteur biométrique (807), un lecteur de jeton (808), et une plateforme informatique qui contient un processeur principal (804) et un composant de confiance (803), le composant de confiance (803) comprenant un processeur sécurisé (300) protégé vis-à-vis des interférences physiques et logiques, une première mémoire non volatile (345) destinée à contenir une clé privée (1001) du composant de confiance et un certificat (1005) de la clé publique correspondante, et une seconde mémoire (335) ; le procédé comprenant les étapes suivantes :
lors d'un lancement de la plate-forme, le composant de confiance (803) saisit une valeur d'une métrique d'intégrité de la plateforme et la stocke dans la seconde mémoire (335) ;
le composant de confiance (803) communique avec le lecteur de jeton de manière à participer à une authentification mutuelle avec un jeton sécurisé (106) qui contient des données biométriques d'utilisateur précédemment saisies, l'authentification mutuelle étant effectuée selon un protocole cryptographique qui se sert de la clé privée (1001) et du certificat (1005) stocké dans la première mémoire (345) de manière à authentifier le composant de confiance vis-à-vis du jeton sécurisé ;
le composant de confiance (803) fournit la valeur de la métrique d'intégrité stockée dans la seconde mémoire (335) au jeton sécurisé (106) et le jeton sécurisé compare cette valeur à une valeur authentique de l'intégrité de la plateforme informatique contenue dans ledit certificat, et en cas de correspondance :
le composant de confiance (803) communique avec le lecteur biométrique (807) de manière à authentifier le lecteur biométrique (807) et à recevoir de celui-ci des données biométriques d'utilisateur saisies par le lecteur biométrique ;
le jeton sécurisé (106) transfère les données biométriques d'utilisateur précédemment saisies au composant de confiance (803) ;
le composant de confiance (803) compare les données biométriques d'utilisateur authentiques aux données biométriques d'utilisateur saisies ; et
le composant de confiance (803) authentifie l'utilisateur sur la base de la comparaison des données biométriques.

8. Procédé selon la revendication 7, dans lequel le lecteur biométrique (807) et le composant de confiance (803) communiquent selon un protocole cryptographique de manière à s'authentifier mutuellement l'un l'autre.

9. Procédé selon la revendication 7, dans lequel le composant de confiance (803) communique de manière sécurisée avec le jeton sécurisé (106) sous une clé de session.

10. Procédé selon la revendication 7, dans lequel le composant de confiance (803) communique de manière sécurisée avec le lecteur biométrique (807) sous une clé de session.

11. Procédé selon la revendication 7, comprenant en outre le fait que le composant de confiance (803) recherche un code à partir du jeton sécurisé (106) de façon à comparer les données biométriques, et efface ce code après utilisation.

12. Procédé selon la revendication 7, comprenant en outre une étape antérieure dans laquelle un tiers de confiance valide les données biométriques d'utilisateur précédemment saisies.
